# EUROPEAN PATENT SPECIFICATION

(11) **EP 1 537 280 B1**
(45) Date of publication and mention of the grant of the patent: **19.12.2007**
(21) Application number: 02758941.5
(22) Date of filing: 29.08.2002
(51) Int. Cl.: E04G 7/22, F16B 7/04

(54) **A GIRDER FOR A SCAFFOLD AND A SCAFFOLD PROVIDED WITH SUCH GIRDERS**
QUERTRÄGER FÜR EIN GERÜST SOWIE GERÜST MIT SOLCHEN QUERTRÄGERN
TRAVERSE POUR ECHAFAUDAGE ET ECHAFAUDAGE POURVUE DE TELLES TRAVERSES

(43) Date of publication of application: 08.06.2005
(73) Proprietor: Verenigde Bedrijven van Thiel B.V., 5741 SX Beek en Donk (NL)
(72) Inventor: VAN DEN GOORBERGH, Anton, Jacobus, NL-5901 HC Oosterhout (NL)
(74) Representative: Winckels, Johannes Hubertus F.
(86) International application number: PCT/NL2002/000568
(87) International publication number: WO 2004/025049

(56) References cited:
- EP-A- 0 320 176
- DE-A- 4 142 220
- GB-A- 521 945
- US-A- 5 961 242

## Description

The invention relates to a girder for a scaffold, provided with uprights and girders (see e.g. NL 9400414) and to the scaffold itself.

Such a scaffold is known from practice and is marketed by applicant. In the known scaffold system, tubular uprights and tubular girders are detachably coupled to each other by means of scaffold tube clamps, for instance cross and/or pivot couplings. A disadvantage of this system is, that building the scaffold with such scaffold tube clamps is relatively cumbersome and hence time consuming. In particular a desired positioning of the different parts relative to each other can form a problem.

US 5,961,242 relates to a bracket for a fencing system, wherein in use, a bracket component is slid onto a post, and a nut is tightened to draw a bracket component together to secure a rail in a sleeve and to clamp a collar onto post.

DE 4142220 discloses a coupling means for girders and uprights. This coupling means is not integral with the girder, it is mounted around the upright and is, during building of the scaffold, fixed to the girder by clamping means.

The object of the present invention is to eliminate the drawbacks of the scaffold while maintaining its advantages. In particular, the invention contemplates a scaffold which can be erected and disassembled relatively easily and rapidly, while the girders can yet be coupled at any arbitrary position on the uprights.

To this end, according to the invention, the scaffold is characterized by the features of claim 1.

Thus, the scaffold can be built up in a simple manner, while the girders can rapidly be coupled to the uprights at a desired height. In this manner, a base for the scaffold floor can be set up at a desired height on a building site, in particular via the following steps, to be carried out in suitable order:
a) uprights are erected at desired positions; and
b) at the desired height, girders are coupled to smooth parts of the uprights via the respective coupling means. Then, the base can be provided with, for instance, scaffold floor parts to serve as a bottom scaffold level.

As the girders are connectable to the uprights at arbitrary positions, the girders can be positioned at the exact desired height. Moreover, the girders are already integrally provided with one or two coupling means, so that coupling to the upright can be carried out relatively rapidly. Building the scaffold can be further simplified by using girders of a limited number of fixed length dimension.

It is noted that the term "smooth" should be understood in a relatively broad sense. In particular, a smooth upright part should be understood to mean that that upright part is substantially not provided with certain protruding parts, such as, for instance, the integral connecting rosettes mentioned.

Further elaborations of the invention are described in the subclaims. Presently, the invention will be further clarified with reference to two exemplary embodiments and the drawing. In the drawing:
Fig. 1 shows a top plan view of a first exemplary embodiment of the invention;
Fig. 2 shows a side view of the girder of the top plan view represented in Fig. 1; and
Fig. 3 shows a front view, represented in perspective, of a second exemplary embodiment of the invention.

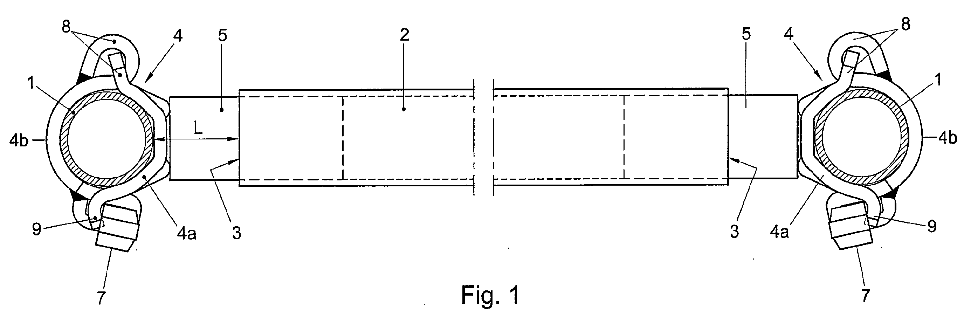

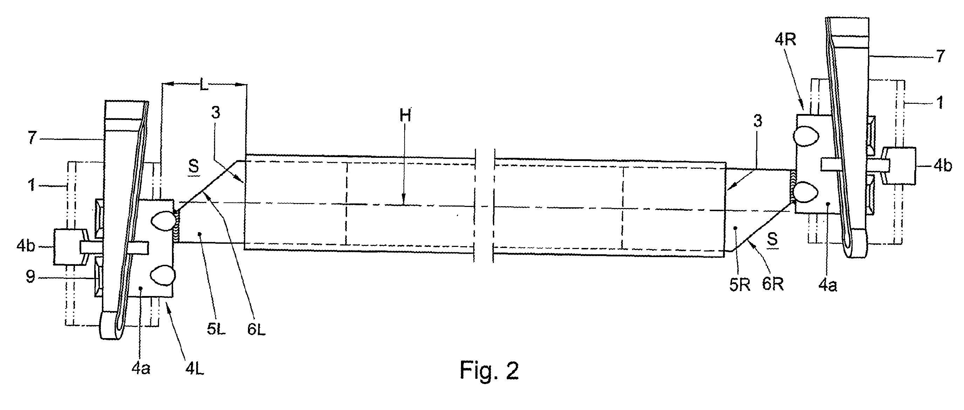

Fig. 1 shows a part of a scaffold which is provided with two uprights 1 between which a girder 2 has been provided. In the side view of the girder 2 represented in Fig. 2, the positions of the uprights 1 are drawn in interrupted lines. As shown in Figs. 1 and 2, the girder 2 is integrally provided at both end faces 3 with coupling means 4 for detachably coupling the girder 2 to smooth parts of the uprights 1. Thus, the girder 2 is distinguished from girders of a system scaffold known from practice, which system girders are only provided at ends with hooks for hooking those girders to rosettes of uprights. Such system girders cannot be coupled to smooth tube parts.

As the girder 2 according to the invention can be coupled to smooth parts of an upright tube 1, the girder 2 can be connected to the upright 1 at any desired height, at least if the upright 1 is of completely smooth design. In addition, the girder 2 provided by the invention can, for instance, be used in combination with the system scaffold upright mentioned. In that case, the girder 2 can be simply coupled by its coupling means 4 to the smooth upright parts extending between the rosettes.

As shown in Figs. 1 and 2, each coupling means comprises a tube clamp 4 to be detachably connected to a smooth tube part. Via an integral connecting body 5, each tube clamp 4 is integrally connected to the girder 2. Each tube clamp 4 is built up analogously to half cross couplings for scaffold tubes known from practice and comprises a first clamp part 4a attached to the respective connecting body 5 to which clamp part a second clamp part 4b is hingedly coupled by means of a hinged joint connection 8. At a free end, each second clamp part 4b is provided with a movable wedge 7 for securing that clamp part 4b to a clamp lip 9 of the first clamp part 4a when the clamp parts 4a, 4b have been provided around an upright 1. Moreover, the two clamp parts 4a, 4b are moved towards each other by means of the wedge 7 such that those clamp parts 4a, 4b exert a desired clamping force on the upright 1.

As shown in the Figures, a cylindrical part of each connecting body 5 extends into the girder 2. The cylindrical part of each connecting body fits into the girder 2 with relatively little or no clearance. As a result, the connecting bodies 5 can be firmly attached to the girder 2, for instance by means of a glued and/or welded joint. Moreover, each connecting body 5 can be firmly connected to the girder 2 by means of thermal clamping. The girder 2 is then heated before the closely fitting connecting bodies 5 are slid into the girder 2. After cooling down and an attendant diameter reduction of the girder 2, the girder 2 can then very firmly clasp the connecting bodies 5. Preferably, each connecting body 5 is of substantially solid design, so that the body is relatively firm, rigid and strong. Moreover, each connecting body 5 is designed such that after assembly each end face 3 of the girder 2 is at a relatively small distance L from the outer side of the oppositely located upright 1. Preferably, this distance L is, for instance, smaller than approximately 5 cm.

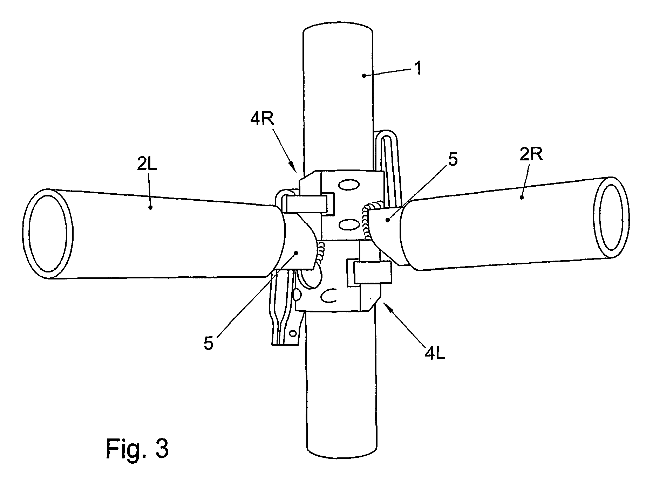

As shown in Fig. 2, the tube clamp 4L of the girder 2 represented on the left hand side is located at an underside of a horizontal intersecting plane H, which plane H intersects the girder 2 along its central axis. Conversely, the tube clamp 4R represented on the right hand side is located on an opposite, upper side of that intersecting plane H. This offers the important advantage that two of these girders 2 can extend at the same height when the girders are fitted to one upright 1. This is further described hereinbelow with reference to Fig. 3. Moreover, each connecting body 5 extends for a relatively large part at the same side of the intersecting plane H as the coupling means 4 connected to that connecting body 5. Further, the connecting bodies 5 of the girder 2 are each formed such that between each connecting body 5 and the oppositely located upright 1 sufficient space S exists for a part of a coupling means 4 of another girder 2 to be coupled at substantially the same height to that upright 1 (see Fig. 3). To that end, in the present exemplary embodiment, the upper side 6L of the left hand connecting body 5L runs diagonally to the tube clamp 4 connected thereto. The underside 6R of the right hand connecting body 5R also runs diagonally to the respective tube clamp 4.

Fig. 3 shows two girders 2 coupled by the respective integral tube clamps 4 to an upright 1. The two tube clamps 4 of these girders are clamped to the upright at abutting positions. The clamp 4L of the girder 2L represented on the left hand side in the Figure is located at an underside of a horizontal intersecting plane, which plane intersects the central axes of the two girders 2. The clamp 4R of the right hand girder 2R is located at the opposite side of that intersecting plane. Due to the positions of the clamps 4 with respect to the respective girders 2, both girders 2 extend at the same height. With a number of the girders 2 and uprights 1 represented, the system represented in Fig. 3 can be extended to a scaffold wherein, each time, a pair of girders 2 are coupled at the same height to an upright. This is advantageous, as, in this manner, the girders 2 can for instance provide one horizontal bearing surface for fitting floor parts (not shown) thereon at the same height. The floor parts can then extend in various directions from and/or over the girders 2. Moreover, as the distance L between the upright 1 and each girder 2 is relatively small, such floor parts can extend relatively close to the upright, so that no or only relatively narrow slits occur between the upright and the floor parts.

The connecting body 5 of each girder 2 allows the clamp 4 of the other girder 2 to be attachable to and detachable from the upright 1. This is achieved through the shape described of each connecting body, and in particular in that the connecting body 5 of each girder 2L, 2R, respectively, extends for a relatively large part at the same side of the intersecting plane as the tube clamp 4L, 4R, respectively, connected to that connecting body 5.

It is self-evident that the invention is not limited to the exemplary embodiments described. Various modifications are possible within the framework of the invention as set forth in the following subclaims.

For instance, the tube clamps 4 of the girder 2 can touch the horizontal intersecting plane H and/or be located at the respective side at a certain distance from that intersecting plane H.

Further, each coupling means 4 of the girder 2 can be designed in different manners, for instance as half cross coupling, half-pivot coupling or the like.

In addition, both coupling means 4 of each girder 2 can be located on opposite sides or, conversely, on the same side of the intersecting plane H mentioned, horizontal after assembly.

Further, the scaffold can be provided with various types of scaffold floors, for instance floors provided with floor parts which can be placed on girders and/or floor parts provided with hooks for hooking those floor parts to girders, for instance system decks.

In addition, uprights of the scaffold can for instance be connected to each other by end faces, for instance by means of "tube-lock"-couplings marketed by applicant.

Further, the scaffold can also be provided with different types of girders, such as girders which are not integrally provided with tube couplings, system girders comprising hooking means to be hooked to system uprights and/or other types of girders.

## Claims

1. A girder for a scaffold, which scaffold is provided with uprights (1) and girders (2) being detachably coupled to each other, **characterized in that** the girder (2) at at least one end face (3) is integrally provided with a coupling means (4), such that the girder (2) can be detachably coupled to a smooth part of an upright (1).

2. A girder according to claim 1, **characterized in that** said coupling means of the girder (2) comprises a tube clamp (4) to be detachably connected to a smooth tube part.

3. A girder according to claim 1 or 2, **characterized in that** at least one coupling means (4) of the girder (2) is substantially located on one respective side of a - at least after assembly in the scaffold - horizontal intersecting plane (H), which plane (H) intersects the girder (2).

4. A girder according to any one of the preceding claims, **characterized in that** each coupling means (4) is provided with an integral connecting body (5) which is integrally connected to the respective girder (2).

5. A girder according to claims 3 and 4, **characterized in that** a relatively large part of the connecting body (5) of each coupling means (4) is located at the same side of said intersecting plane (H) as the respective coupling means (4).

6. A girder according to at least claim 4, **characterized in that** each connecting body (5) is of substantially solid design.

7. A girder according to at least claims 3 and 4, **characterized in that** each said connecting body (5) is designed for keeping a space (S) between the respective girder (2) and an oppositely located upright (1) clear, which space (S) is destined for a part of a coupling means (4) of a different girder (2) to be coupled to that upright (1) at substantially the same height.

8. A girder according to any of claims 4-7, **characterized in that** each connecting body (5) extends at least partly in a respective end (3) of the respective girder (2).

9. A girder according to claim 8, **characterized in that** the connecting body fits into the girder (2) with relatively little or no clearance.

10. A girder according to claim 4, **characterized in that** the connecting body (5) is designed such that the distance (L) between the end face (3) of the girder (2) and an outer side (6) of the upright (1), after assembly, is less than approximately 5 cm.

11. A girder according to any one of the preceding claims, **characterized in that** the girder (2) is integrally provided at both end faces (3) with coupling means (4) for coupling the girder (2) to uprights (1).

12. A girder according to claims 3 and 11, **characterized in that** the two coupling means (4) of the girder (2) are located on opposite sides of said intersecting plane (H).

13. A girder according to any one of the preceding claims, **characterized in that** each coupling means (4) comprises a half cross-coupling.

14. A girder according to any of the preceding claims, wherein the coupling means (4) are integrally attached to the girder (2).

15. A girder according to any of the preceding claims, wherein an integral connecting body (5) of each of the coupling means (4) is attached to the girder (2) by means of a glued and/or welded joint, or thermal clamping.

16. A scaffold provided with uprights and girders, wherein each girder is a girder according to any one of the preceding claims.

17. A method for building a scaffold according to claim 16, wherein a base for a scaffold floor is set up at a desired height via the following steps, to be carried out in suitable order:
a) uprights (1) are erected at desired positions; and
b) at the desired height, the girders (2) are coupled to smooth parts of the uprights (1) via the respective coupling means (4).

## Patentansprüche

1. Träger für ein Gerüst, wobei das Gerüst mit Ständern (1) und Trägern (2) ausgestattet ist, die lösbar miteinander verbunden sind, **dadurch gekennzeichnet, dass** der Träger (2) an zumindest einer Stirnfläche (3) fest mit einem Verbindungsmittel (4) ausgestattet ist, so dass der Träger (2) lösbar mit einem glatten Teil eines Ständers (1) verbindbar ist.

2. Träger nach Anspruch 1, **dadurch gekennzeichnet, dass** die besagten Verbindungsmittel des Trägers (2) eine Rohrklemme (4) zum lösbaren Verbinden mit einem glatten Rohrteil beinhalten.

3. Träger nach Anspruch 1 oder 2, **dadurch gekennzeichnet, dass** mindestens ein Verbindungsmittel (4) des Trägers (2) sich im Wesentlichen auf einer entsprechenden Seite einer - zumindest nach Zusammenbau im Gerüst - horizontalen Schnittebene (H) befindet, wobei die Ebene (H) den Träger (2) schneidet.

4. Träger nach einem der vorhergehenden Ansprüche, **dadurch gekennzeichnet, dass** jedes Verbindungsmittel (4) mit einem integrierten Verbindungsteil (5) ausgestattet ist, das fest mit dem entsprechenden Träger (2) verbunden ist.

5. Träger nach Anspruch 3 oder 4, **dadurch gekennzeichnet, dass** ein relativ großer Teil des Verbindungsteils (5) jedes Verbindungsmittels (4) auf der gleichen Seite der genannten Schnittebene (H) wie das entsprechende Verbindungsmittel (4) angeordnet ist.

6. Träger zumindest nach Anspruch 4, **dadurch gekennzeichnet, dass** jedes Verbindungsteil (5) eine im Wesentlichen solide Bauform aufweist.

7. Träger zumindest nach Anspruch 3 und 4, **dadurch gekennzeichnet, dass** jedes genannte Verbindungsteil (5) einen Freiraum (S) zwischen dem entsprechenden Träger (2) und einem gegenüber angeordneten Ständer (1) freihaltend ausgestaltet ist, wobei der Freiraum (S) für einen Teil eines Verbindungsmittels (4) eines mit dem Ständer (1) auf im Wesentlichen der gleichen Höhe zu verbindenden anderen Träger (2) bestimmt ist.

8. Träger nach einem der Ansprüche 4 bis 7, **dadurch gekennzeichnet, dass** jedes Verbindungsteil (5) sich zumindest teilweise in ein zugehöriges Ende (3) des zugehörigen Trägers (2) erstreckt.

9. Träger nach Anspruch 8, **dadurch gekennzeichnet, dass** das Verbindungsteil in den Träger (2) mit relativ kleinem oder ohne Spielraum passt.

10. Träger nach Anspruch 4, **dadurch gekennzeichnet, dass** das Verbindungsteil so (5) ausgeführt ist, dass der Abstand (L) zwischen der Stirnfläche (3) des Trägers (2) und einer Außenseite (6) des Ständers (1) nach dem Zusammenbau weniger als etwa fünf Zentimeter beträgt.

11. Träger nach einem der vorhergehenden Ansprüche, **dadurch gekennzeichnet, dass** der Träger (2) an beiden Stirnflächen (3) fest mit Verbindungsmitteln (4) zum Verbinden des Trägers (2) mit Ständern (1) ausgestattet ist.

12. Träger nach den Ansprüchen 3 und 11 **dadurch gekennzeichnet, dass** die beiden Verbindungsmittel (4) des Trägers (2) an gegenüberliegenden Seiten der genannten Schnittebene (H) angeordnet sind.

13. Träger nach einem der vorgehenden Ansprüche, **dadurch gekennzeichnet, dass** jedes Verbindungsmittel (4) eine halbe Kreuzverbindung beinhaltet.

14. Träger nach einem der vorhergehenden Ansprüche, wobei die Verbindungsmittel (4) fest an dem Träger (2) angebracht sind.

15. Träger nach einem der vorhergehenden Ansprüche, wobei ein integriertes Verbindungsteil (5) von jedem der Verbindungsmittel (4) an dem Träger (2) mit Hilfe einer verklebten und/oder verschweißten Verbindung oder durch thermisches Verspannen angebracht ist.

16. Gerüst, ausgestattet mit Ständern und Trägern, wobei jeder Träger ein Träger nach einem der vorhergehenden Ansprüche ist.

17. Verfahren zum Aufbauen eines Gerüsts nach Anspruch 16, wobei eine Basis für einen Gerüstboden in einer gewünschten Höhe durch die folgenden Schritte errichtet wird, die in geeigneter Reihenfolge auszuführen sind:
a) Ständer (1) werden an gewünschten Positionen aufgerichtet; und
b) in der gewünschten Höhe werden die Träger (2) mit glatten Teilen der Ständer (1) durch die entsprechenden Verbindungsmittel (4) verbunden.

## Revendications

1. Poutre pour un échafaudage, ledit échafaudage étant fourni avec des montants (1) et des poutres (2) étant couplés de façon détachable les uns aux autres, **caractérisée en ce que** la poutre (2), à au moins une face d'extrémité (3), est intégralement dotée d'un moyen de couplage (4), de sorte que la poutre (2) puisse être couplée de façon détachable à une partie lisse d'un montant (1).

2. Poutre selon la revendication 1, **caractérisée en ce que** ledit moyen de couplage de la poutre (2) comprend un élément de serrage de tube (4) devant être connecté de façon détachable à une partie du tube lisse.

3. Poutre selon la revendication 1 ou 2, **caractérisée en ce qu'**au moins un moyen de couplage (4) de la poutre (2) est sensiblement placé sur un côté respectif d'un - au moins après l'assemblage dans l'échafaudage - plan d'intersection horizontal (H), ledit plan (H) coupant la poutre (2).

4. Poutre selon l'une quelconque des revendications précédentes, **caractérisée en ce que** chaque moyen de couplage (4) est doté d'un corps de connexion intégral (5) qui est intégralement connecté à la poutre respective (2).

5. Poutre selon les revendications 3 et 4, **caractérisée en ce qu'**une partie relativement grande du corps de connexion (5) de chaque moyen de couplage (4) est située du même côté dudit plan d'intersection (H) que le moyen de couplage respectif (4).

6. Poutre selon au moins la revendication 4, **caractérisée en ce que** chaque corps de connexion (5) est d'une conception sensiblement robuste.

7. Poutre selon au moins les revendications 3 et 4, **caractérisée en ce que** chaque corps de connexion (5) est conçu pour maintenir un espace (S) entre la poutre respective (2) et un montant situé en face (1) dégagé, ledit espace (S) est destiné pour une partie d'un moyen de couplage (4) d'une poutre différente (2) devant être couplée à ce montant (1) à une hauteur sensiblement identique.

8. Poutre selon l'une quelconque des revendications 4 à 7, **caractérisée en ce que** chaque corps de connexion (5) s'étend au moins partiellement dans une extrémité respective (3) de la poutre respective (2).

9. Poutre selon la revendication 8, **caractérisée en ce que** le corps de connexion s'insère dans la poutre (2) avec un écart relativement mince voire sans aucun écart.

10. Poutre selon la revendication 4, **caractérisée en ce que** le corps de connexion (5) est conçu de sorte que la distance (L) entre la face d'extrémité (3) de la poutre (2) et un côté externe (6) du montant (1), après assemblage, est inférieure à environ 5 cm.

11. Poutre selon l'une quelconque des revendications précédentes, **caractérisée en ce que** la poutre (2) est intégralement dotée sur les deux faces d'extrémité (3) d'un moyen de couplage (4) pour coupler la poutre (2) aux montants (1).

12. Poutre selon les revendications 3 et 11, **caractérisée en ce que** les deux moyens de couplage (4) de la poutre (2) sont situés sur les côtés opposés dudit plan d'intersection (H).

13. Poutre selon l'une quelconque des revendications précédentes, **caractérisée en ce que** chaque moyen de couplage (4) comprend un demi couplage croisé.

14. Poutre selon l'une quelconque des revendications précédentes, dans laquelle les moyens de couplage (4) sont intégralement fixés à la poutre (2).

15. Poutre selon l'une quelconque des revendications précédentes, dans laquelle un corps de connexion intégral (5) de chacun des moyens de couplage (4) est fixé à la poutre (2) par l'intermédiaire d'un joint collé et/ou soudé, ou d'un serrage thermique.

16. Echafaudage composé de montants et de poutres, dans lequel chaque poutre est une poutre selon l'une quelconque des revendications précédentes.

17. Procédé pour construire un échafaudage selon la revendication 16, dans lequel une base pour un plancher d'échafaudage est fixée à une hauteur souhaitée via les étapes suivantes, devant être réalisées dans un ordre approprié :
a) les montants (1) sont édifiés à des positions souhaitées ; et
b) à la hauteur souhaitée, les poutres (2) sont couplées à des parties lisses des montants (1) via les moyens de couplage respectifs (4).
